# EUROPEAN PATENT APPLICATION

(11) **EP 1 445 126 A1**
(43) Date of publication of application: **11.08.2004**
(21) Application number: 04001701.4
(22) Date of filing: 27.01.2004
(51) Int. Cl.: B60D 1/02

(54) **Trailer coupling and drawbeam**

(30) Priority: 04.02.2003 SE 0300270
(71) Applicant: VBG AB, 462 28 Vänersborg (SE)
(72) Inventor: Johansson, Stefan, 462 53 Vänersborg (SE)
(74) Representative: Edlund, Fabian

(57) **Abstract**

A trailer coupling for traction vehicles, comprising a coupling jaw (1) which changes into a tapered neck portion (5), and a fixing part (6) which is turnably mounted on the neck portion (5), the fixing part (6) being adapted to be directly attachable to a drawbeam (14; 23, 24) by means of connection joints (21; 31) acting transversely to the pulling direction (A) of the coupling.

Owing to the construction, the fixing part engages surfaces of the drawbeam which are essentially parallel to the pulling direction, which significantly improves the capability of the drawbeam to withstand tensile stress.

## Description

### Technical Field

The present invention relates to a trailer coupling for traction vehicles, comprising a coupling jaw which changes into a tapered neck portion, and a fixing part which is turnably mounted on the neck portion. The invention also relates to a drawbeam adapted to be fixed to a traction vehicle.

More specifically, the invention concerns a coupling and a drawbeam intended for heavy-duty vehicles.

### Technical Background

That intended in this application by trailer coupling for traction vehicles is the part of a trailer coupling which is positioned on a traction vehicle.

A conventional trailer coupling comprises a first coupling part which is positioned on the traction vehicle and which has a coupling jaw adapted to receive a second coupling part, such as a drawbar eye of a drawbar, which is positioned on the trailer. The coupling jaw changes into an elongate neck which is mounted in bearings in a sleeve. This drawbeam sleeve is arranged to exhibit the required tolerance and strength and is adapted to be fixed to a drawbeam on the traction vehicle.

To this end, the drawbeam has a fixing surface which is extended in a normal plane to the pulling direction. The fixing surface has holes to allow fixing of the drawbeam sleeve, and its shape (size, number of holes, shape and size of the holes etc.) usually is of standard type to allow fixing of couplings of different makes, as required.

A traditional drawbeam extends transversely to the vehicle, between two U beams to which it is fixed. The fixing surface is then positioned half-way between the U beams. To resist the great forces to which the coupling is subjected, it is often necessary to reinforce the fixing in various ways, for instance using an additional metal sheet which is arranged over the fixing surface.

According to another alternative, the drawbeam comprises two horizontal tubes which are arranged between the U beams. The tubes in turn support two end plates which are spaced from each other a distance which is smaller than the distance between the U beams. A plate with a fixing surface as described above is then welded between the end plates, under the tubes. Although the reduced distance between the end plates reduces the strain on the fixing surface, it is still difficult to obtain sufficient strength in the construction.

### Summary of the Invention

An object of the present invention is to solve the above problems and to provide a coupling which is secured to the drawbeam in a satisfactory manner.

According to the invention, this object is achieved by a trailer coupling of the type stated by way of introduction, where the fixing part (also sometimes called drawbeam sleeve) is adapted to be directly attachable to a drawbeam by means of connection joints acting transversely to the pulling direction of the coupling.

The object is also achieved by a drawbeam comprising a fixing part which is arranged by means of connection joints acting transversely to the pulling direction, said fixing part further being adapted to turnably support a trailer coupling.

The fundamental inventive idea thus is to eliminate the need for the fixing surface, and instead to integrate the front coupling part (or at least the drawbeam sleeve) with the drawbeam. The solution is the unique fixing part, which on the one hand supports the front coupling part (coupling jaw) and, on the other hand, is fixed to the drawbeam in such a manner that it simultaneously improves the strength of the drawbeam. In contrast to traditional drawbeam sleeves which are fixed to the drawbeam by means of connection joints in the pulling direction, the fixing part according to the invention is arranged to be fixed by means of connection joints transversely to the pulling direction.

It is this transverse fixing that achieves the required strength. Owing to the construction, the fixing part engages surfaces of the drawbeam which are essentially parallel to the pulling direction, which significantly improves the capability of the drawbeam to withstand tensile stress.

The now presented fixing part thus constitutes at the same time part of the drawbeam and part of the coupling. Thus, the interface in a normal plane to the pulling direction, which in traditional couplings occurs between the drawbeam sleeve and the fixing surface, does not occur.

In order to further improve the force-absorbing capability, the connection joints can be positioned in mutually separated planes, for instance normal planes to the pulling direction.

The fixing part preferably has bore holes adapted to bolt joints and oriented transversely to the pulling direction. The bore holes can be through holes, which allow easy and reliable securing of the fixing part in the drawbeam. By bore hole is here meant also holes which have been formed in other ways than by boring, for instance the fixing part can be cast with a through hole.

According to one embodiment of the drawbeam, it comprises a sectional element which in the fixed position extends between two beams extending in the travelling direction of the traction vehicle, said sectional element having an upper side, a lower side and at least one at least partly open side, the fixing part being fixedly arranged inside the sectional element by means of connection joints to the upper and lower sides of the sectional element.

The fixing part can be arranged in the sectional element so that, when a trailer coupling has been mounted in the fixing part, the open side of the sectional element faces the connection point. When the drawbeam has been mounted on a vehicle, the open side of the sectional element thus faces in the same direction as the coupling jaw, backwards relative to the travelling direction.

Alternatively, the fixing part is arranged the other way round, so that the open side of the sectional element faces away from the connection point. With the drawbeam mounted on a vehicle, the open side of the sectional element then faces in the opposite direction relative to the coupling jaw, thus forwards relative to the travelling direction. What determines which of the alternatives is preferred is how the chassis of the vehicle is disposed and how much space is available in different directions.

The sectional element can be a U section, and the drawbeam is then advantageously based on a conventional drawbeam, which makes it easy and inexpensive to produce. However, other designs of transverse drawbeams, comprising an upper side and a lower side, are conceivable, such as I section, E section etc.

Another embodiment of the drawbeam comprises two essentially parallel end plates arranged in essentially vertical planes parallel to the travelling direction of the traction vehicle, the fixing part being arranged between said end plates.

With this construction, the fixing part is mounted by means of connection joints sideways, which still act transversely to the pulling direction.

Furthermore, the end plates can each be formed with a front and a rear through hole, and the drawbeam may further comprises a first frame part extending through said front holes, and a second frame part extending through said rear holes, which frame parts in the fixed position extend horizontally between two beams extended in the travelling direction of the traction vehicle, so as to support the drawbeam.

### Brief Description of the Drawings

Additional aspects and advantages of the present invention will now be described in more detail with reference to the accompanying drawings, which by way of example illustrate currently preferred embodiments of the invention.
Fig. 1 is an exploded view of a coupling according to a first embodiment of the invention.
Fig. 2 shows the fixing part of the coupling in Fig. 1.
Fig. 3 shows a drawbeam according to a second embodiment of the invention, provided with a coupling according to Fig. 1.
Fig. 4 shows a variant of the drawbeam in Fig. 3.
Fig. 5 shows a drawbeam according to a third embodiment of the invention, provided with a coupling according to Fig. 1.
Fig. 6 shows a drawbeam according to a fourth embodiment of the invention, provided with a coupling according to Fig. 1.

### Detailed Description of Preferred Embodiments

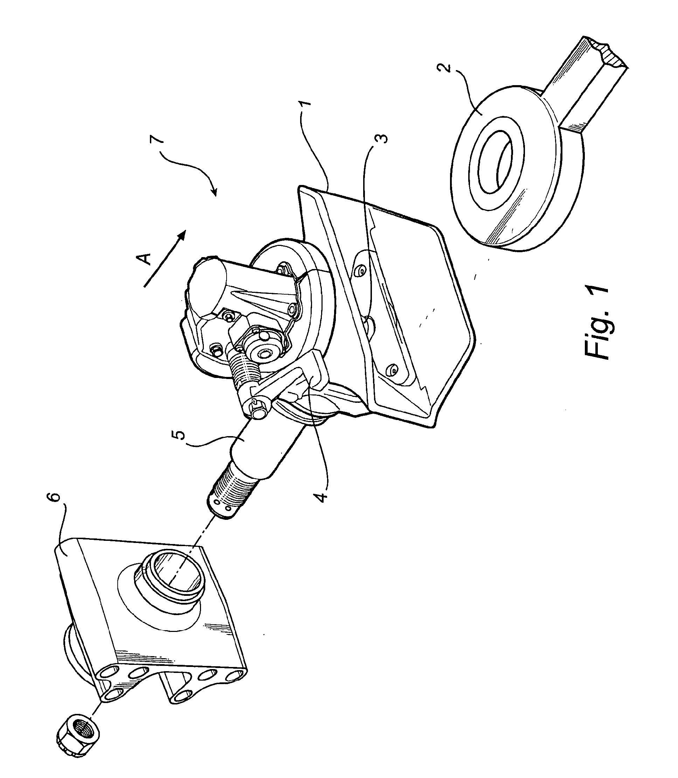

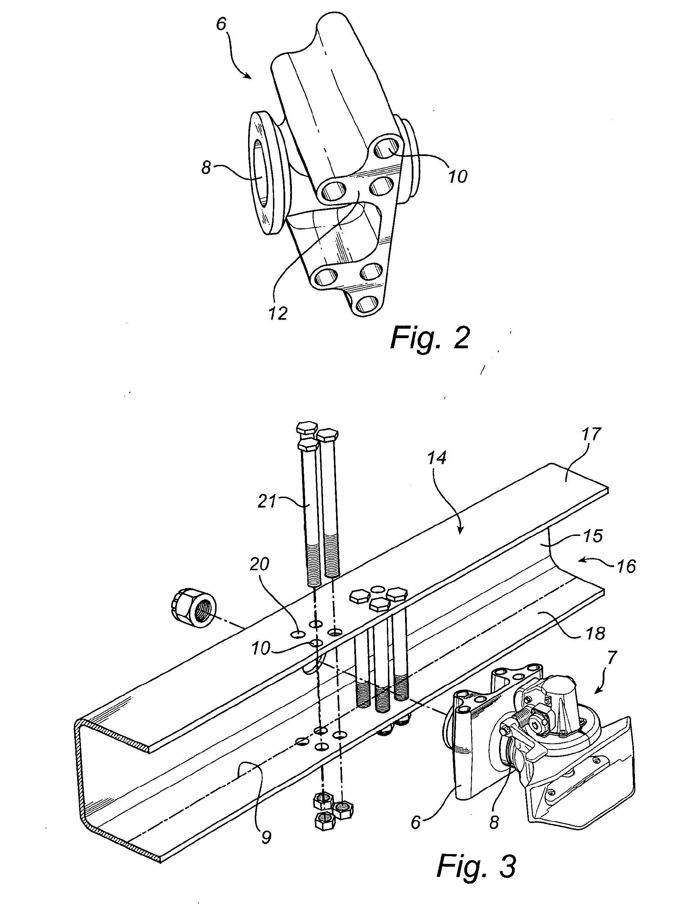

The coupling 7, which is shown in Fig. 1, is essentially of a conventional type. Thus, it comprises a coupling jaw 1 adapted to receive a coupling part, such as a drawbar eye 2, arranged on a trailer, a coupling bolt 3 adapted to be inserted through the drawbar eye 2 with this inserted in the coupling jaw 1, and a device 4 for operating the coupling bolt 3. The coupling jaw 1 changes into an elongate neck portion 5, which is turnably mounted in a fixing part 6 according to the invention. It is thus this fixing part 6, which is shown more distinctly in Fig. 2, that replaces the conventionally used drawbeam sleeve, and that distinguishes the coupling shown in Fig. 1 from a coupling according to prior-art technique.

The fixing part 6 is a form-fitted massive piece of material, preferably of steel, but alternatively of some other suitable material, such as aluminium. It has a through hole 8 adapted to receive the neck portion 5 of the coupling. The desired shape can be obtained by casting, forging or extrusion, the latter perhaps being preferred when the material is aluminium.

An important aspect of the shape of the fixing part is that it should allow attaching to a drawbeam by means of connection joints acting transversely to the pulling direction A of the coupling. In the shown example, this has been provided by means of through bore holes 10, which can receive through bolt joints. Each bore hole 10 extends through the material perpendicular to the hole 8, and in the shown example all bore holes 10 are parallel. Non-parallel bore holes can alternatively be used.

As an alternative to through bore holes, non-through holes can be formed in opposite sides of the fixing part to receive bolt joints from the respective sides.

The shape of the fixing part is also adapted to resist in a satisfactory manner tensile stress in the pulling direction of the coupling. In the shown example, this has been achieved by the material being thicker in portions 12 round the through bore holes.

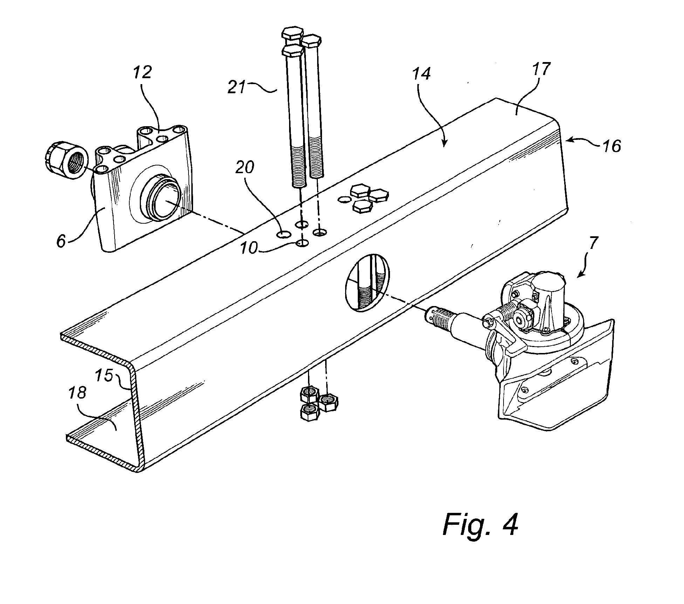

Figs 3 and 4 show a drawbeam according to another preferred embodiment of the invention. The drawbeam reminds of a conventional drawbeam by being essentially a sectional element, such as a U beam 14, adapted to be fixed between two beams (not shown) extended in the longitudinal direction of the vehicle. The fixing part 6 of a coupling according to the invention can thus be arranged in the U beam 14, with its bore holes 10 directed towards the upper and lower sides 17, 18 of the U beam. In Fig. 3, the U beam is oriented so that its open side 16 faces a coupling 7 mounted on the drawbeam 14, while in Fig. 4 it is oriented with its web 15 towards a coupling 7 mounted on the drawbeam 14. It is to be noted that the web 15 of the U beam in Fig. 4 is positioned between the fixing part 6 and the coupling 7.

The dimensions of the fixing part 6 are such as to essentially correspond with the distance between the upper and lower sides 17, 18 of the U beam, so as to achieve a good fit. Holes 20 are formed on the upper and lower sides 17, 18 of the U beam to allow attaching of the fixing part 6 by means of connection joints, suitably bolt joints 21 through the bore holes 10, which thus act transversely to the pulling direction of the coupling. As mentioned above and shown in Figs 3-4, the bolt joints can be through bolts. A relatively large contact surface between the fixing part 6 and the upper and lower sides 17, 18 of the U beam results in reduced shear forces on the bolt joints when subjected to loads in the form of shocks and jerks. This prevents the material of the bolt joints 21 from being fatigued.

By the fixing part 6 being attached to the drawbeam 14 in this manner, it forms an integrated unit with the drawbeam and adds to the strength of the drawbeam in the pulling direction.

In a manner known per se, the hole 8 for receiving the coupling in the fixing part 6 can be slightly displaced relative to the centre 9 of the fixing part 6. As a result, the receiving position in the vertical direction between the upper and lower sides 17, 18 of the drawbeam 14 can be changed by turning the fixing part 6 half a turn, seen round the neck portion 5 of the coupling.

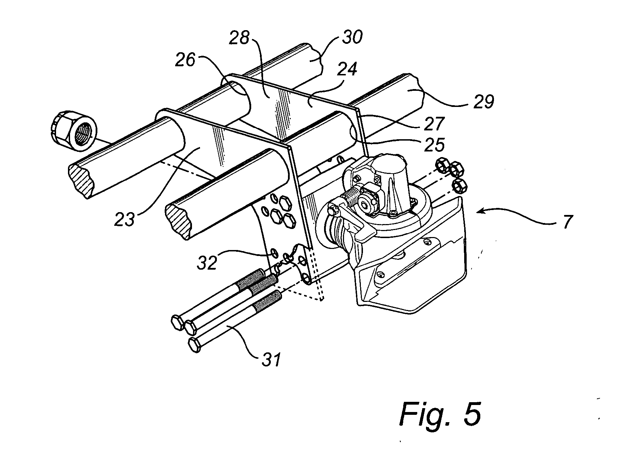

Fig. 5 shows a drawbeam according to a second preferred embodiment of the invention. This drawbeam comprises two essentially L-shaped end plates 23, 24, each being formed with two through holes, a front, approximately in the "knee" 27, and a rear, in one "leg" 28. The end plates 23, 24 are further arranged essentially parallel to each other, and two frame parts, suitably in the form of thick steel tubes 29, 30, extend through the front and rear holes 25, 26. The frame parts 29, 30 are adapted to extend, in the fixed position, horizontally between two beams (not shown) extended in the travelling direction of the traction vehicle, and thus support the drawbeam.

The fixing part 6 of a coupling 7 according to the invention is arranged between the two end plates 23, 24. Once more, through bolt joints 31 are used to attach the fixing bar 6 to the drawbeam. The end plates have holes 32 fitted to the purpose.

According to the shown embodiment, the through bore holes are slightly displaced relative to the hole 8 in which the neck portion of the coupling is to be received. In other words, the bore holes 10 on one side of the hole 8 are positioned closer to the hole 8 than the bore holes on the other side. Thus, the receiving position in the vertical direction can be changed by turning the fixing part 6 half a turn, seen round the neck portion 5 of the coupling.

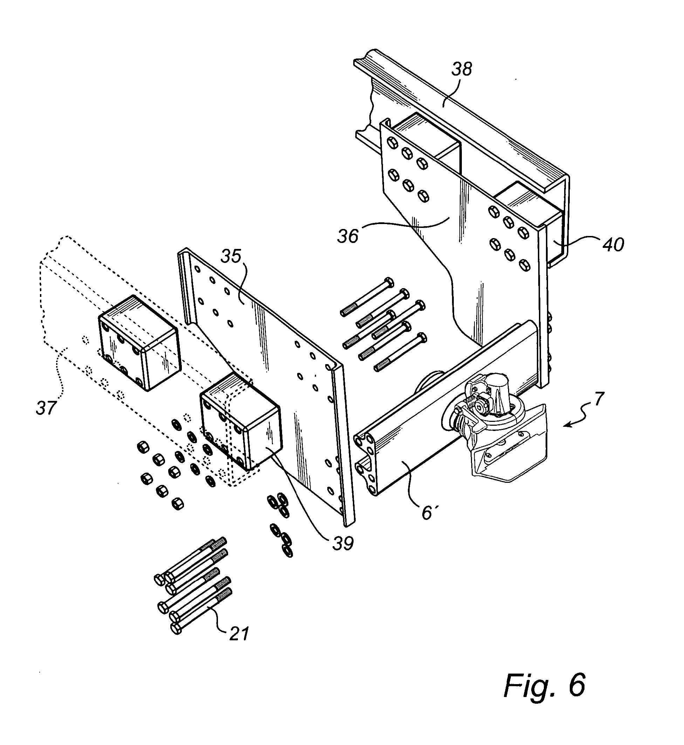

One more embodiment of the drawbeam according to the invention is shown in Fig. 6. Like the drawbeam in Fig. 5, this drawbeam comprises two end plates 35, 36, but has no frame parts of the type that are to be found in the embodiment in Fig. 5. Instead, each end plate 35, 36 is fixed to one of the beams 37, 38 extended in the travelling direction of the vehicle, only separated from the beams by means of spacers 39, 40. Furthermore, the fixing part 6' is elongated and extends between the two end plates 35, 36. According to this embodiment, the fixing part 6' has essentially fully taken over the role as drawbeam.

It is will be appreciated that a person skilled in the art can modify the above-described embodiments of the invention within the scope of the appended claims. For example, the fixing part can be of a different shape, if considered convenient with regard to its attachment to a drawbeam. The connection joints between the fixing part and the drawbeam may consist of, for instance, welding or riveting instead of bolt joints.

## Claims

1. A trailer coupling for traction vehicles, comprising a coupling jaw (1) which changes into a tapered neck portion (5), and a fixing part (6) which is turnably mounted on said neck portion (5), **characterised in that** said fixing part (6) is adapted to be directly attachable to a drawbeam (14; 23, 24) by means of connection joints (21; 31) acting transversely to the pulling direction (A) of the coupling.

2. A coupling as claimed in claim 1, wherein said connection joints are positioned in at least two mutually separated normal planes to the pulling direction.

3. A coupling as claimed in claim 1 or 2, wherein said fixing part (6) has bore holes (10) adapted to bolt joints and oriented transversely to the pulling direction.

4. A coupling as claimed in claim 3, wherein said bore holes (10) are through holes.

5. A drawbeam adapted to be fixed to a traction vehicle, **characterised by** a fixing part (6) which is attached to the drawbeam (14; 23, 24) by means of connection joints (21; 31) acting transversely to the pulling direction (A) of the coupling, said fixing part (6) being further adapted to turnably support a trailer coupling (7).

6. A drawbeam as claimed in claim 5, further comprising a sectional element (14) which in the fixed position extends between two beams extending in the travelling direction of the traction vehicle, said sectional element having an upper side (17), a lower side (18) and at least one at least partly open side (16), the fixing part (6) being fixedly arranged inside the sectional element (14) by means of connection joints (21) to said upper and lower sides (17).

7. A drawbeam as claimed in claim 6, wherein the fixing part is arranged in the sectional element (14) so that, when a trailer coupling (7) has been mounted in the fixing part (6), the open side (16) of the sectional element faces the connection point.

8. A drawbeam as claimed in claim 5, comprising at least two essentially parallel end plates (23, 24; 35, 36) arranged in essentially vertical planes parallel to the travelling direction of the traction vehicle, the fixing part (6) being arranged between said end plates (23, 24; 35, 36).

9. A drawbeam as claimed in claim 8, wherein the end plates (23, 24; 35, 36) are each provided with a front and a rear through hole (25, 25), and wherein the drawbeam further comprises
a first frame part (29) extending through said front holes (25), and
a second frame part (30) extending through said rear holes (26),
said frame parts (29, 30) in the fixed position extending horizontally between two beams extending in the travelling direction of the traction vehicle, so as to support the drawbeam.

10. A drawbeam as claimed in claim 9, wherein the fixing part (6) in the fixed position is positioned under the horizontal frame parts (29, 30).
